# FASCICULE DE BREVET EUROPEEN

(11) **EP 0 329 557 B1**
(45) Date de publication et mention de la délivrance du brevet: **10.02.1993**
(21) Numéro de dépôt: 89400439.9
(22) Date de dépôt: 17.02.1989
(51) Int. Cl.: G06K 7/06, G06K 19/06

(54) **Dispositif portable pour l'interrogation, la lecture et l'enregistrement d'une carte du type à composant électronique et/ou à enregistrement magnétique**
Tragbare Einrichtung zum Abfragen, Lesen und Aufzeichnen einer IC- und/oder einer Magnetkarte
Portable device for recording, interrogating and reading an IC and/or a magnetic recording card

(30) Priorité: 19.02.1988 FR 8802022
(43) Date de publication de la demande: 23.08.1989
(73) Titulaire: SGS-THOMSON MICROELECTRONICS S.A., 94250 Gentilly (FR)
(72) Inventeur: Brisson, Pierre, F-75116 Paris (FR)
(74) Mandataire: Ballot, Paul Denis Jacques

(56) Documents cités:
- EP-A- 0 199 234
- FR-A- 2 584 211
- FR-A- 2 598 837
- GB-A- 2 156 552
- PATENT ABSTRACTS OF JAPAN, vol. 10, no. 84 (P-442)[2141], 3 avril 1986, page 123 P 442; & JP-A-60 220 482 (DAINIPPON INSATSU K.K.) 05-11-1985
- TOUTE L'ELECTRONIQUE,, no. 504, mai 1985, pages 70-77, Paris, FR; H. LAMBERT: "La carte à circuit intégré"

## Description

L'invention concerne les dispositifs portables qui permettent d'interroger une carte munie d'une puce électronique et/ou d'une bande magnétique pour lire son contenu, éventuellement le modifier et effectuer des transferts d'information d'une carte sur une autre. Elle concerne plus particulièrement des dispositifs de ce type réalisés sous forme de claviers portables.

L'utilisation de cartes pour permettre l'accès de services bancaires, téléphoniques, médicaux...ou simplement à des locaux à entrée contrôlée est de plus en plus répandue. Dans leur réalisation la plus simple, ces cartes comportent un enregistrement magnétique qui est lu et éventuellement modifié par un dispositif de lecture dans lequel la carte est insérée. Dans des réalisations plus récentes, l'enregistrement magnétique est associé à ou remplacé par un composant électronique complexe appelé "puce électronique" qui est logé dans une cavité pratiquée dans l'épaisseur de la carte. Ce composant électronique comprend principalement une mémoire et des circuits logiques annexes qui permettent non seulement de lire ladite mémoire ou d'y enregistrer des informations mais aussi d'effectuer certaines opérations logiques et/ou arithmétiques. Bien entendu, les dispositifs de lecture de telles cartes sont prévus pour se connecter aux bornes de sortie du composant électronique afin, en premier lieu, de l'alimenter électriquement et d'y effectuer ensuite de opérations d'interrogation, de lecture et d'enregistrement.

Les dispositifs de lecture qui sont actuellement utilisés sont des appareils relativement coûteux et encombrants et qui sont spécialisés dans la manipulation d'un certain type de cartes, par exemple les cartes bancaires. Il est donc nécessaire de se rendre dans les endroits où ces dispositifs de lecture sont localisés pour effectuer des opérations sur ces cartes. De telles contraintes limitent l'utilisation de cartes de ce type à des réseaux de services ayant des moyens financiers relativement importants et écartent de ce fait l'utilisation de telles cartes entre particuliers ou entre petites entreprises et leurs clients.

Il existe donc un besoin pour un dispositif de lecture simple et peu encombrant de cartes à composant ou puce électronique et/ou encore à bande magnétique.

Il a été proposé dans certaines applications de mettre en oeuvre des cartes comportant leur dispositif d'interrogation incorporé qui est constitué principalement d'un clavier du type "calculette électronique" et d'un écran associé. De telles cartes, réalisables sous forme de prototypes, sont difficiles à fabriquer industriellement. En outre, elle ne permettent pas de réaliser des transactions entre cartes d'un même type car elles ne peuvent s'interroger qu'elles-mêmes. On pourra également se reporter à l'état de la technique qui est constitué par les demandes de brevet FR-A-2 598 837 dans laquelle est décrit un dispositif portable pour l'interrogation, la lecture et/ou l'enregistrement d'une carte à composant électronique et/ou à bande magnétique.

Un but de la présente invention est donc de réaliser un dispositif de lecture de carte à puce électronique et/ou à bande magnétique sous forme de clavier portable.

Un autre but de la présente invention est de réaliser un tel clavier portable avec écran incorporé.

Encore un autre but de l'invention est de réaliser un clavier portable qui permet de modifier le contenu de la mémoire de la carte et d'effectuer ainsi des transactions entre cartes.

L'invention se rapporte plus particulièrement à un dispositif portable pour l'interrogation,la lecture et/ou l'enregistrement d'une carte du type à composant électronique et/ou à bande magnétique ainsi que le transfert d'informations entre une telle carte et une autre tel que décrit dans 1 revendication 1. Ce dispositif comprend :
- une structure rigide qui supporte un clavier et un écran,
- des moyens associés à ladite structure rigide pour recevoir au moins ladite carte à composant électronique et pour réaliser la connexion électronique entre ladite carte et la structure rigide,
- des moyens électroniques associés au clavier et à l'écran pour activer le clavier et l'écran de manière à permettre l'accès aux informations contenues dans le composant électronique pour en réaliser l'interrogation et/ou la lecture des dites informations et/ou l'enregistrement d'autres informations.

Les moyens électroniques associés au clavier et à l'écran font partie du composant électronique de la carte interrogée.

Dans un autre exemple particulier de réalisation, les moyens électroniques associés au clavier et à l'écran sont constitués par un composant électronique d'une deuxième carte qui est portée par la structure rigide.

D'autres caractéristiques et avantages de la présente invention apparaîtront à la lecture de la description suivante d'exemples particuliers de réalisation, ladite description étant faite en relation avec le dossier joint dans lequel :
- la figure 1 est une vue en perspective cavalière d'un premier exemple de réalisation d'un clavier portable avec écran incorporé selon l'invention,
- la figure 2 est une vue en perspective cavalière d'un deuxième exemple de réalisation d'un clavier portable avec écran incorporé selon l'invention, et
- la figure 3 est un schéma fonctionnel simplifié du dispositif selon l'invention.

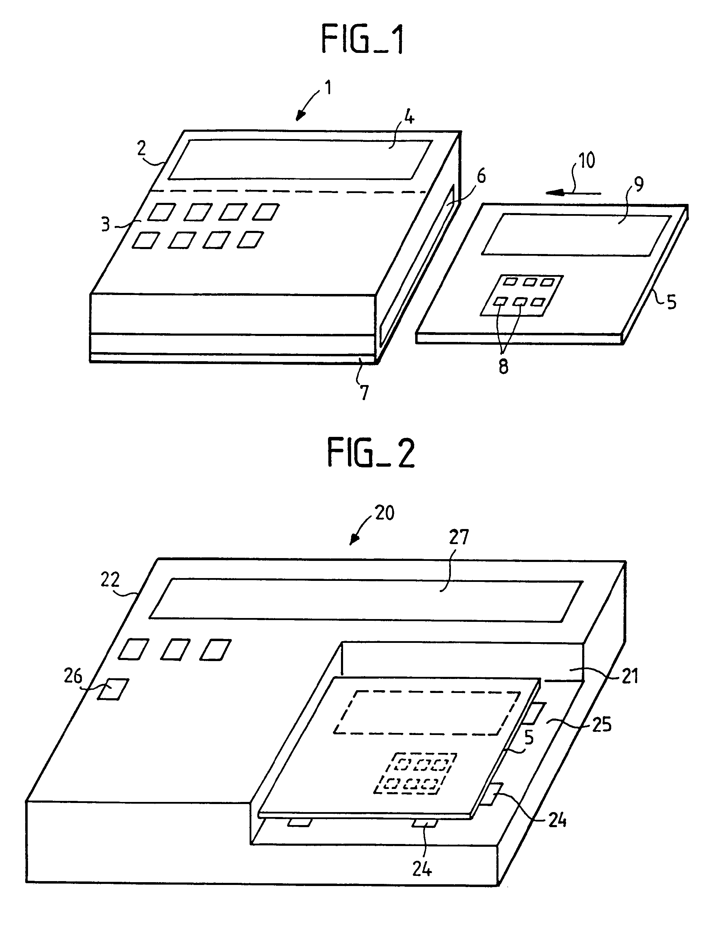

La figure 1 est une vue en perspective cavalière d'un dispositif selon l'invention réalisé sous la forme d'un boîtier 1 de forme parallélépipèdique rectangle dont les dimensions longitudinale et transversale sont légèrement supérieures à celles d'une carte 5 du type bancaire.La face avant 2 de ce boîtier 1 comporte un clavier 3 dont seules quelques touches ont été représentées et un écran 4. La hauteur du boîtier est suffisante pour créer un volume dans lequel sont disposés les circuits électroniques associés au clavier et à l'écran , y compris une pile électrique, ainsi qu'une cavité prévue pour accommoder la carte 5. Ce dispositif présente une ouverture 6 disposée sur un coté latéral du boîtier, le coté droit sur la figure 1, par laquelle est enfilée la carte. Ce dispositif comporte des moyens, non représentés, pour guider la carte 5 lors de son introduction (flèche 10) et la maintenir en plus dans une position déterminée pour en permettre l'interrogation, la lecture et/ou l'enregistrement par l'intermédiaire du clavier 3. Cette cavité est fermée vers le haut par la face avant 2 portant le clavier 3 et l'écran 4 et vers le bas par une face arrière 7 qui peut être une pièce rapportée. Dans certaines réalisations, la face arrière 7 peut être supprimée à condition bien entendu que le fond du boîtier 2 comporte des moyens pour enfiler et maintenir la carte 5.

Le clavier 3 et l'écran 4 peuvent être de tous types connus, notamment du type utilisé dans les calculettes électroniques de poche. La cavité de réception de la carte 5 doit comporter, non seulement de moyens mécaniques de guidage et de maintien en place de la carte 5 mais aussi de moyens électriques de connexion avec des bornes de sortie 8 du composant électronique de la carte 5. Elle peut comporter également des moyens de lecture/écriture d'une bande magnétique 9 associée à la carte 5.

La figure 2 est une vue en perspective cavalière d'une autre forme de réalisation du dispositif portable 20 d'interrogation, de lecture et d'enregistrement d'une carte à composant électronique et/ou bande magnétique. Cette forme de réalisation diffère de celle de la figure 1 par le fait que la cavité servant à recevoir la carte 5 est remplacée par une encoche 21 pratiquée dans la face avant 22 d'un boîtier 20. C'est dans cette encoche 21 qu'est posée sur une tablette 25 et maintenue en place la carte 5 par des ergots 24. Les moyens de connexion électriques du boîtier avec les bornes de sorties 8 du composant électronique de la carte ainsi que les moyens de lecture/écriture sur la bande magnétique y sont portés par la tablette 25.

Les parties de la face avant 22 autres que l'encoche 21 servent de support à un clavier 26 et à un écran 27 qui peuvent être de tous types connus, notamment de ceux insérés dans la fabrication des calculettes électroniques. Les circuits électroniques associés au clavier 26 et à l'écran 27 sont disposés dans le boîtier 22.

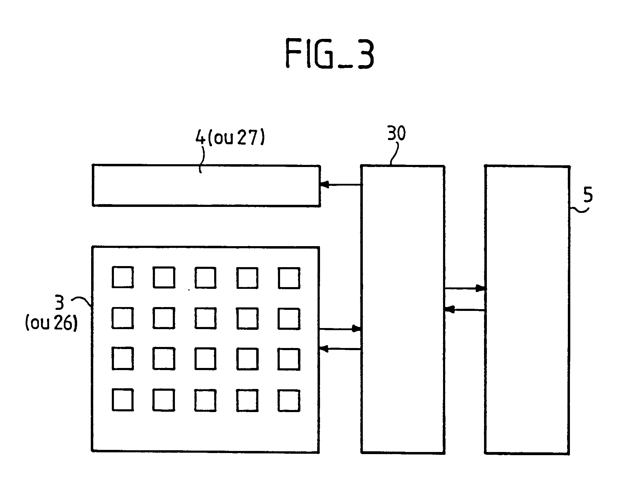

La figure 3 donne le schéma fonctionnel simplifié du dispositif selon l'invention, schéma dans lequel on a repris les références des figures 1 et 2 pour désigner les mêmes éléments. Sur ce schéma, la clavier et l'écran sont connectés à la carte 5, c'est-à-dire en fait au composant électronique 8 ou à la bande magnétique 9, par l'intermédiaire d'un circuit électronique 30 qui réalise l'interface.

Quel que soit l'exemple de réalisation considéré, les fonctions qui peuvent être remplies par le clavier (3 ou 26) surtout et par l'écran (4 ou 27) dans une moindre mesure sont très variables selon les applications envisagées.

C'est ainsi que l'on peut prévoir que le dispositif de l'invention puisse réaliser un nombre maximal de fonctions, le choix entre une ou plusieurs d'entre elles étant effectué par l'opérateur en fonction de divers critères laissés à son appréciation tels que le type de carte présenté, l'opération à effectuer, le support à interroger : bande magnétique et/ou composant électronique. Un tel dispositif serait alors équivalent à un terminal d'interrogation et pourrait être d'un prix élevé.

Selon l'invention, les différentes fonctions nécessaires à l'interrogation, et/ou la lecture et/ou l'enregistrement d'une carte donnée sont fournis par la carte elle-même, c'est-à-dire en fait par le composant électronique qu'elle contient. En conséquence, ce composant électronique de la carte devra être prévu, non seulement pour remplir ses fonctions habituelles mais aussi pour activer le dispositif de l'invention afin que ce dernier remplisse ses fonctions d'interrogation, de lecture et d'enregistrement. A la limite extrême, le dispositif de l'invention ne sera actif, c'est-à-dire ne pourra remplir ses fonctions d'interrogation, de lecture et d'enregistrement, que connecté à la carte interrogée. Entre ces deux modes d'utilisation extrêmes, savoir toutes les fonctions actives dans le dispositif de l'invention ou aucune, il existe divers modes intermédiaires d'utilisation dans lesquels les fonctions sont partagées entre le dispositif de lecture et la carte interrogée.

Bien entendu, le dispositif de l'invention peut présenter des fonctions autres que celles strictement nécessaires à l'interrogation de cartes, notamment une fonction calcul ou encore une fonction horloge...

Le dispositif de l'invention a été décrit en relation avec l'utilisation d'une seule carte, celle qui doit être interrogée. Cependant, le dispositif de l'invention peut être prévu pour utiliser deux ou plusieurs cartes en même temps, l'une serait la carte à interroger tandis que l'autre serait la carte qui activerait une ou plusieurs fonctions du dispositif de l'invention selon la carte à interroger. Cette deuxième carte serait choisie par l'opérateur en fonction de ses besoins tels que fondés par le type de carte qu'il souhaite interroger ou le type d'opérations qu'il envisage d'effectuer.

Pour réaliser un tel dispositif selon le paragraphe ci-dessus, il suffit par exemple de combiner le dispositif de la figure 1 dans celui de la figure 2 ou inversement de manière à ajouter à ce dernier une cavité pour recevoir une deuxième carte.

Dans la description qui vient d'être faite de différents exemples de réalisation du dispositif de l'invention, à chaque fonction particulière correspond une configuration particulière et une signification particulière des touches du clavier.

Les applications du dispositif de l'invention sont très variées et on n'en citera ci-après que quelques-unes parmi les plus courantes :
- la mise à jour d'un relevé personnel de compte bancaire contenu dans une carte.
- le transfert d'unités de paiement, téléphoniques par exemple, d'un support sur un autre, par exemple d'une carte sur une autre,
- la mise à jour d'un carnet d'adresses électronique, d'un dictionnaire ou glossaire par incorporation via le clavier ou par transfert électronique d'une carte sur l'autre,
- le changement des fonctions d'un clavier en fonction des utilisations recherchées...

Il est important de noter que les dispositifs de l'invention décrits ci-dessus ne s'opposent pas, bien au contraire, à l'utilisation de codes d'autorisation qui doivent être mis en oeuvre par l'opérateur pour interroger une carte. Toute manoeuvre sur la carte interrogée sans ce code conduira à un blocage de toute opération ultérieure non précédée de la présentation dudit code.

Le dispositif de l'invention est particulièrement bien adapté au transfert d'informations d'une carte sur une autre, notamment lorsqu'il comporte la possibilité de supporter simultanément deux cartes. Ces informations à transférer peuvent être, par exemple, des unités de prépaiement téléphonique ou autre. Bien entendu, s'agissant d'unités de paiement ou prépaiement, il est nécessaire de prévoir des sécurités sur la carte support de manière que son accès et donc le transfert des unités monétaires soit protégé. En outre, les transactions à effectuer ne doivent pas pouvoir faire l'objet de fraudes.

A cet effet, la carter qui effectue un paiement doit comporter non seulement une clé d'accès particulière pour ce type d'opération monétaire mais aussi une limitation du montant du transfert. Ceci peut être réalisé sous la forme d'une unité intermédiaire de dédouanement associée à ladite carte de paiement.

## Revendications

1. Dispositif portable pour l'interrogation, la lecture et/ou l'enregistrement d'une carte (5) à composant électronique (8) ainsi que le transfert d'informations entre une telle carte et une autre comprenant :
- une structure rigide (1, 20) qui supporte un clavier (3,26) et un écran (4,27),
- des moyens (6,21,25,24) associés à ladite structure rigide (1,20) pour recevoir au moins ladite carte (5) à composant électronique et pour réaliser la connexion électronique entre ladite carte et la structure rigide,
- des moyens électroniques (30) associés au clavier (3,26) et à l'écran (4,27) pour activer le clavier et l'écran de manière à permettre l'accès aux informations contenues dans le composant électronique et/ou la lecture desdites informations et/ou l'enregistrement d'autres informations,
caractérisé en ce que les moyens électroniques associés au clavier et à l'écran font partie de la carte (5) à composant électronique de manière à rendre opérationnel lesdits clavier (3,26) et écran (4,27).

2. Dispositif portable selon la revendication 1, caractérisé en ce que les moyens associés à la structure rigide (1,20) comprennent des moyens complémentaires pour recevoir une deuxième carte à composant électronique et pour réaliser la connexion électronique entre ladite deuxième carte et la structure rigide de manière à permettre le transfert d'informations entre les deux cartes.

3. Dispositif portable selon la revendication 2, caractérisé en ce que les moyens électroniques associés au clavier et à l'écran sont constitués par le composant électronique de l'une des deux cartes à composant électronique.

4. Dispositif portable selon la revendication 1, 2 ou 3 caractérisé en ce que les moyens électroniques (30) associés au clavier (3,26) et à l'écran (4,27) ou au composant électronique d'au moins une des cartes à composant électronique permettent de réaliser une fonction horloge.

5. Dispositif portable selon l'une quelconque des revendications précédentes, caractérisé en ce que la première carte comporte en outre une bande magnétique (9).

## Patentansprüche

1. Tragbare Vorrichtung zum Abfragen, Lesen und/oder Aufzeichnen auf einer Karte (5) mit elektronischem Bauteil (8) sowie zur Informationsübertragung zwischen einer solchen Karte und einer anderen, enthaltend:
- eine starre Struktur (1, 20), die eine Tastatur (3, 26) und einen Bildschirm (4, 27) trägt,
- der starren Struktur (1, 20) zugeordnete Mittel (6, 21, 25, 24), um wenigstens die Karte (5) mit elektronischem Bauteil aufnehmen und die elektronische Verbindung zwischen der Karte und der starren Struktur herzustellen,
- der Tastatur (3, 26) und dem Bildschirm (4, 27) zugeordnete elektronische Mittel (30) zur Aktivierung der Tastatur und des Bildschirms, um den Zugang zu den in dem elektronischen Bauteil enthaltenen Informationen und/oder das Lesen der Informationen und/oder die Aufzeichnung anderer Informationen zu ermöglichen,
dadurch gekennzeichnet, daß die der Tastatur und dem Bildschirm zugeordneten elektronischen Mittel zu der Karte (5) mit elektronischem Bauteil gehören, um die Tastatur (3, 26) und den Bildschirm (4, 27) betriebsfähig zu machen.

2. Tragbare Vorrichtung gemäß Anspruch 1, dadurch gekennzeichnet, daß die der starren Struktur (1, 20) zugeordneten Mittel zusätzliche Mittel enthalten, um eine zweite Karte mit elektronischem Bauteil aufzunehmen und um die elektronische Verbindung zwischen der zweiten Karte und der starren Struktur herzustellen, so daß die Informationsübertragung zwischen den beiden Karten ermöglicht wird.

3. Tragbare Vorrichtung gemäß Anspruch 2, dadurch gekennzeichnet, daß die der Tastatur und dem Bildschirm zugeordneten elektronischen Mittel durch das elektronische Bauteil einer der beiden Karten mit elektronischem Bauteil gebildet sind.

4. Tragbare Vorrichtung gemäß einem der Ansprüche 1, 2 oder 3, dadurch gekennzeichnet, daß die der Tastatur (3, 26) und dem Bildschirm (4, 27) zugeordneten elektronischen Mittel (30) oder das elektronische Bauteil von wenigstens einer der Karten mit elektronischem Bauteil die Realisierung der Funktion einer Uhr ermöglichen.

5. Tragbare Vorrichtung gemäß einem der vorhergehenden Ansprüche, dadurch gekennzeichnet, daß die erste Karte außerdem einen Magnetstreifen (9) aufweist.

## Claims

1. A portable device for interrogating, reading and/or writing in a card (5) having an electronic component (8) and also for transferring data between one such card and another, comprising:
- a rigid structure (1, 20) which supports a keyboard (3, 26) and a screen (4, 27),
- means (6, 21, 25, 24) associated with the said rigid structure (1, 20) for receiving at least the said card (5) having an electronic component and for forming an electronic connection between the said card and the rigid structure,
- electronic means (30) associated with the keyboard (3, 26) and with the screen (4, 27) for activating the keyboard and the screen so as to allow access to the data contained in the electronic component and/or reading of the said data and/or writing of other data,
characterized in that the electronic means associated with the keyboard and the screen form part of the card (5) having an electronic component so as to render the said keyboard (3, 26) and screen (4, 27) operational.

2. A portable device according to claim 1, characterized in that the means associated with the rigid structure (1, 20) comprise complementary means for receiving a second card comprising an electronic component and for forming the electronic connection between the said second card and the rigid structure so as to make transfer of data between the two cards possible.

3. A portable device according to claim 2, characterized in that the electronic means associated with the keyboard and the screen comprise the electronic component of one of the two card comprising an electronic component.

4. A portable device according to claim 1, 2 or 3, characterized in that the electronic means (30) associated with the keyboard (3, 26) and with the screen (4, 27), or with the electronic component of at least one of the cards having an electronic component, make it possible to provide a clock function.

5. A portable device according to any one of the preceding claims, characterized in that the first card also includes a magnetic strip (9).
